# EUROPEAN PATENT APPLICATION

(11) **EP 2 444 307 A1**
(43) Date of publication of application: **25.04.2012**
(21) Application number: 11275132.6
(22) Date of filing: 21.10.2011
(51) Int. Cl.: B62K 3/00, B62K 5/04, B62K 15/00

(54) **Scooter having foldable device and foldable device thereof**

(30) Priority: 22.10.2010 CN 201010517527
(71) Applicant: Shanghai Magic Wheels Sporting Goods Co., Ltd., Shangai 200032 (CN)
(72) Inventor: Wang, Xiuping, 200032 Shanghai (CN); Tang, Winghou, Hong Kong (CN); Wang, Limin, 200032 Shanghai (CN)
(74) Representative: Crowhurst, Charlotte Waveney

(57) **Abstract**

The invention discloses a scooter (100) having a foldable device (5) and the foldable device (5) thereof. The foldable device (5) comprises a first rotating shaft element (51), a second rotating shaft element (52) and a locking member. The locking member is moveable relative to the first rotating shaft element (51) between a locked position and a released position. When the locking member is in the released position, the first rotating shaft element (51) is rotatable relative to the second rotating shaft element (52), and when the locking member is in the locked position, the first rotating shaft element (51) is locked relative to the second rotating shaft element (52) so that it can not rotate. The foldable device (5) is compact in structure and has a simple appearance.

## Description

### FIELD OF THE INVENTION

The present invention relates to a scooter for transportation, sport and recreation, and in particular to a scooter having a foldable device and the foldable device thereof

### BACKGROUND

Sports recreational devices are in continuous development. As a modem recreational tool, the scooter has gradually entered into each family. The scooter can be used both as a novel transportation tool and as a recreational tool, which can bring more convenience and fun to people's lives. Therefore, the scooter has won the popularity of many people and especially caught the eyes of young people.

For facilitating carrying and storage, the scooter is usually designed into a foldable structure so that the overall volume of the scooter and space occupied can be reduced.

Chinese Utility Model Patent Issue No. CN2432980 discloses a C-shaped foldable device for scooter frame. The foldable device comprises an adjustment tube which is connected with a beam tube in the upper portion and connected with a front fork in the lower portion, a square tube welded to the adjustment tube at a certain angle, and two bracket plates arranged symmetrically at both sides of the square tube and welded to a bottom plate. The two bracket plates are fan-shaped An arc shaped moving groove, which is used in conversion of folded and deployed two states and is centered on a connecting shaft, is provided on each bracket plate. The two bracket plates are hinged to the square tube by the connecting shaft so that the square tube can be folded in a direction towards the bottom plate together with the adjustment tube, thereby realizing folding of the scooter. However, the type of foldable device composed of the adjustment tube, the square tube and the bracket plate is large in size and not compact in structure. Although this foldable scooter can reduce the overall height and overall volume of the scooter to some extent after being folded, the scooter will still occupy a large space since the overall volume is still relatively large after being folded due to the large volume of the foldable device itself In addition, since the adjustment tube, the square tube and the bracket plates are generally required to be formed from steel, the foldable device composed of them will necessarily possess a heavier weight, which in turn induces increase of the overall weight of the scooter. Therefore, the scooter is not easy to store and stow and not convenient to carry.

Therefore, there exists an urgent need for an improvement which overcomes the above problems in the prior art.

### SUMMARY OF THE INVENTION

The main technical problem to be solved by the invention is to provide a scooter having a foldable device and the foldable device thereof, the foldable device being compact in structure and the scooter being easy to carry and store.

The following technical solutions are provided by the invention in order to solve the above technical problem.

One aspect of the invention provides a scooter having a foldable device. The scooter comprises a handle, a steering wheel and a standing board. The steering wheel is connected to a steering vertical shaft. The handle is connected to the steering vertical shaft via a foldable device. The foldable device comprises a first rotating shaft element, a second rotating shaft element and a locking member. One of the first rotating shaft element and the second rotating shaft element is fixed to the handle, and the other is fixed to the steering vertical shaft. The first rotating shaft element is pivotally connected with the second rotating shaft element so that the first rotating shaft element is pivotable relative to the second rotating shaft element about a pivot, and the locking member is moveable relative to the first rotating shaft element between a locked position and a released position. When the locking member is in the released position, the first rotating shaft element is rotatable relative to the second rotating shaft element, and when the locking member is in the locked position, the first rotating shaft element is locked relative to the second rotating shaft element so that it can not rotate.

Preferably, the first rotating shaft element is provided with a pin groove and the second rotating shaft element is provided with a sliding groove. The sliding groove comprises a circumferential section and at least one locking section communicated with the circumferential section. The circumferential section is of an arc shape which is concentric with the pivot. The locking member comprises at least one pin which extends into the sliding groove from the pin groove. The pin can move radially in relation to the pivot inside the pin groove. When the pin moves into the circumferential section of the sliding groove, the locking member is in the released position; and when the pin moves into the locking section of the sliding groove, the locking member is in the locked position.

Preferably, the first rotating shaft element comprises two pieces, the second rotating shaft element is located between the two pieces of the first rotating shaft element, and a restoring spring is installed on the first rotating shaft element. When the locking member is in the released position, the restoring spring exerts resilient force on the locking member so that the locking member returns to the locked position automatically without external force.

Preferably, the sliding groove comprises two locking sections located at two end portions of the circumferential section. When the pin moves into one of the locking sections, the scooter is locked in a deployed state, and when the pin moves into the other of the locking sections, the scooter is locked in a folded state.

Preferably, both the first rotating shaft element and the second rotating shaft element are of a circular plate shape, the locking member further comprises a pin cover fixed to the pin, and the pin cover has a spherical segment shaped outer surface.

According to another aspect, the invention provides a foldable device for scooter. The foldable device comprises a first rotating shaft element, a second rotating shaft element and a locking member. The first rotating shaft element is pivotally connected with the second rotating shaft element so that the first rotating shaft element is rotatable relative to the second rotating shaft element about a pivot, and the locking member is moveable relative to the first rotating shaft element between a locked position and a released position. When the locking member is in the released position, the first rotating shaft element is rotatable relative to the second rotating shaft element, and when the locking member is in the locked position, the first rotating shaft element is locked relative to the second rotating shaft element so that it can not rotate.

Preferably, the first rotating shaft element is provided with a pin groove and the second rotating shaft element is provided with a sliding groove. The sliding groove comprises a circumferential section and at least one locking section communicated with the circumferential section. The circumferential section is of an arc shape which is concentric with the pivot. The locking member comprises at least one pin which extends into the sliding groove from the pin groove. The pin can move radially in relation to the pivot inside the pin groove. When the pin moves into the circumferential section of the sliding groove, the locking member is in the released position; and when the pin moves into the locking section of the sliding groove, the locking member is in the locked position.

Preferably, the first rotating shaft element comprises two pieces, the second rotating shaft element is located between the two pieces of the first rotating shaft element, and a restoring spring is installed on the first rotating shaft element. When the locking member is in the released position, the restoring spring exerts resilient force on the locking member so that the locking member returns to the locked position automatically without external force.

Preferably, the sliding groove comprises two locking sections located at two end portions of the circumferential section. When the pin moves into one of the locking sections, the scooter is locked in a deployed state, and when the pin moves into the other of the locking sections, the scooter is locked in a folded state.

Preferably, the sliding groove comprises two circumferential sections which are disposed symmetrically about the center of the pivot. A locking section is respectively provided on both end portions of each circumferential section. When the locking member is in the released position, the pin can move in the two sliding grooves simultaneously, and when the locking member is in the locked position, the pin can move into the two locking sections of the sliding groove simultaneously.

The foldable device of the invention forms a rotatable structure by pivotally connecting the first rotating shaft element and the second rotating shaft element. The locking and release of the foldable device can be realized by simply moving the locking member relative to one of the rotating shaft elements. Therefore, the foldable device is convenient to manipulate, safe and reliable. Besides, the foldable device itself is relatively small in size and compact in structure design, which minimizes space occupied by the whole scooter after being folded, thus facilitating placement, stow and carrying of the scooter.

Other aspects and features of the invention will become apparent from the following detailed descriptions in connection with accompanying drawings. However, it should be noted that the drawings are for explanation purpose only and are not intended as limiting the scope of the invention, since the scope should be defined with reference to attached claims. It should be also noted that unless otherwise stated, the drawings are not drawn to scale and they only intend to diagrammatically illustrate the structure and flowchart described herein.

### BRIEF DESCRIPTION OF THE DRAWINGS

The specific embodiments of the invention will be described in detail hereinafter in connection with accompanying drawings, wherein:

Fig. 1 is a schematic perspective view of a scooter having a foldable device in accordance with an embodiment of the invention, wherein the scooter is in a deployed state;

Fig. 2 is a main side view of the foldable device portion of the scooter shown in Fig. 1 in the deployed state;

Fig. 3 is a left view of the foldable device portion of the scooter shown in Fig. 2;

Fig. 4 is a rear view of the foldable device portion of the scooter shown in Fig. 2;

Fig. 5 is a sectional view of the foldable device portion of the scooter shown in Fig. 3 taken along line A-A;

Fig. 6 is a sectional view of the foldable device portion of the scooter shown in Fig. 2 taken along line B-B;

Fig. 7 is a main side view of the foldable device portion of the scooter shown in Fig. 1 in a folded state;

Fig. 8 is a left view of the foldable device portion of the scooter shown in Fig. 7;

Fig. 9 is a rear view of the foldable device portion of the scooter shown in Fig. 7;

Fig. 10 is a sectional view of the foldable device portion of the scooter shown in Fig. 7 taken along line C-C; and

Fig. 11 is a sectional view of the foldable device portion of the scooter shown in Fig. 8 taken along line D-D.

### DETAILED DESCRIPTION OF THE EMBODIMENTS

A particular embodiment of the invention will be described in detail hereinafter in connection with accompanying drawings in order that the above objectives, features and advantages will become apparent and more easily understood.

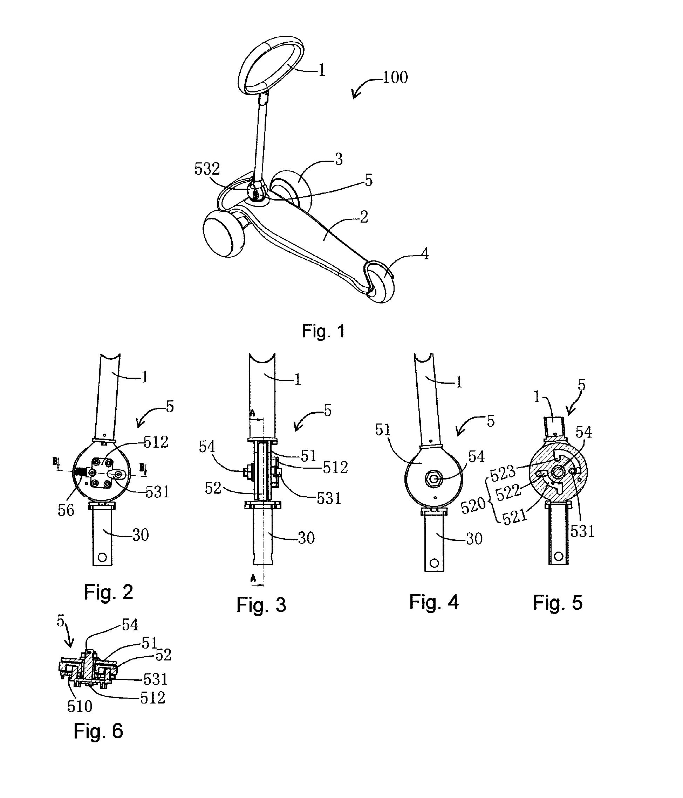

Fig. 1 is a schematic perspective view of a scooter having a foldable device in accordance with an embodiment of the invention, wherein the scooter is in a deployed state. As shown in Fig. 1, the scooter 100 having the foldable device in accordance with the invention comprises a handle 1, a standing board 2, a steering wheel 3 located at a front end of the standing board 2, a positioning wheel 4 located at a rear end of the standing board 2, and a foldable device 5. The steering wheel 3 is connected to a steering vertical shaft 30. The handle 1 is connected to the steering vertical shaft 30 via the foldable device 5. The folding of the scooter 100 can be realized by the foldable device 5 so that the scooter 100 can be put into a folded state when not in use, thus reducing the overall volume of the scooter 100.

As further shown in Figs. 2 to 11, the foldable device 5 comprises two pieces of first rotating shaft element 51 fixed to the handle 1, a second rotating shaft element 52 fixed to the steering vertical shaft 30, and a locking member (not labeled), wherein the second rotating shaft element 52 is located between the two pieces of the first rotating shaft element 51. Of course, in other embodiments of the invention, the first rotating shaft element 51 can be also fixed to the steering vertical shaft 30, and the second rotating shaft element 52 is accordingly fixed to the handle 1, which can likewise realize the objective of the invention without departing from the essence of the technical solutions of the invention.

Both the first rotating shaft element 51 and the second rotating shaft element 52 are of a circular plate shape, and the first rotating shaft element 51 and the second rotating shaft element 52 are pivotally connected with each other so that the first rotating shaft element 51 is rotatable relative to the second rotating shaft element 52 about a pivot 54.

The locking member comprises at least one pin 531 and a pin cover 532 fixed to the pin 531. The first rotating shaft element 51 is provided with a pin groove 510 into which the pin 531 extends. A pin stopper 512 and a restoring spring 56 are also mounted on the first rotating shaft element 51. The pin stopper 512 abuts against the pin 531 in order to position the pin 531 so that the pin 531 is mounted on the first rotating shaft element 51 in such a way that it is moveable radially in relation to the pivot 54. The restoring spring 56 is mounted between the first rotating shaft element 51 and the pin 531 in a pre-pressed manner so as to elastically press one end of the pin 531. The pin cover 532 has a spherical segment shaped outer surface so as to encapsulate the inner structure, provide an aesthetic appearance and facilitate manipulating. By toggling the pin cover 532 with an external force, the locking member can be moved from a locked position into a released position. When the locking member is in the released position, the pin 531 will return to the locked position automatically once the external force is removed due to the resilient force action on the pin 531 of the locking member exerted by the restoring spring 56, thus locking the scooter 100 in a given deployed state or a folded state.

The second rotating shaft element 52 is provided with a sliding groove 520. The sliding groove 520 comprises a circumferential section 521 and at least one locking sections 522, 523 communicated with the circumferential section 521. Preferably, as shown in the drawings, the sliding groove 520 comprises two circumferential sections 521 disposed symmetrically about the center of the pivot 54. Each circumferential section 521 is of an arc shape which is concentric with the pivot 54, and has a horizontally locking section 522 that extends in an essentially horizontal direction and a vertically locking section 523 that extends in an essentially vertical direction.

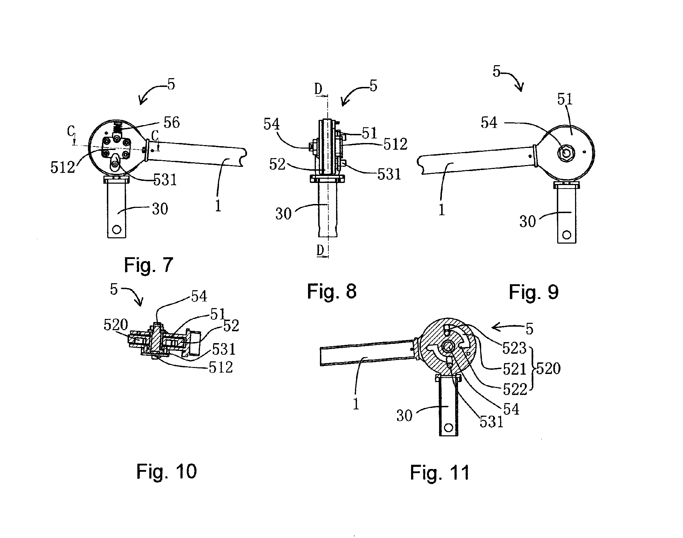

The pin 531 extends into the sliding groove 520 from the pin groove 510. When the pin 531 moves into the circumferential section 521 of the sliding groove 520, the locking member is in the released position. At this moment, the first rotating shaft element 51 is rotatable relative to the second rotating shaft element 52 so that the handle 1 is rotatable relative to the steering vertical shaft 30. As shown in Fig. 5, when the pin 531 moves into the horizontally locking section 522 of the sliding groove 520, the locking member is in the horizontally locked position. At this moment, the first rotating shaft element 51 is horizontally locked relative to the second rotating shaft element 52 so that it cannot rotate. Therefore, the handle 1 is not rotatable relative to the steering vertical shaft 30 and the scooter 100 is maintained in the deployed state. As shown in Fig. 11, when the pin 531 moves into the vertically locking section 523 of the sliding groove 520, the locking member is in the vertically locked position. At this moment, the first rotating shaft element 51 is vertically locked relative to the second rotating shaft element 52 so that it cannot rotate. Therefore, the handle 1 is not rotatable relative to the steering vertical shaft 30 and the scooter 100 is maintained in the folded state. Preferably, as shown in Figs. 5 and 11, the pin 531 can move simultaneously in the two sliding grooves 520. When the locking member is in the locked position, the pin 531 simultaneously moves into the two horizontally locking sections 522 or the two vertically locking sections 523 of the sliding groove 520.

Figs. 2 to 6 disclose a schematic partial structure view of the scooter 100 of the invention in the deployed state. Figs.7 to 11 disclose a schematic partial structure view of the scooter 100 of the invention in the folded state. As shown in Figs. 2 to 6, when it is required to fold up the scooter 100 in the deployed state, the pin 531 in the horizontally locked position is moved forwardly of the scooter 100, the pin 531 moves radially in relation to the pivot 54 inside the pin groove 510 and simultaneously compresses the restoring spring 56. The pin 531 moves out of the horizontally locking sections 522 of the sliding groove 520 and moves into the circumferential section 521 of the sliding groove 520. The first rotating shaft element 51 is rotatable relative to the second rotating shaft element 52 and the handle 1 is rotated in a direction close to the standing board 2 until the pin 531 moves into the vertically locking sections 523 of the sliding groove 520 under the resilient force action of the restoring spring 56 (as shown in Fig. 11). At this moment, the pin 531 is in the vertically locked position, the first rotating shaft element 51 is not rotatable relative to the second rotating shaft element 52 so that the handle 1 is not rotatable relative to the steering vertical shaft 30; the handle 1 is placed adjacent to the standing board 2 so that the scooter 100 is folded up for facilitating storage and carrying. As shown in Figs. 7 to 11, when it is required to deploy the scooter 100 in the folded state, the pin 531 in the vertically locked position is moved upwardly of the scooter 100, the pin 531 moves radially in relation to the pivot 54 inside the pin groove 510 and simultaneously compresses the restoring spring 56. The pin 531 moves out of the vertically locking sections 523 of the sliding groove 520 and moves into the circumferential section 521 of the sliding groove 520. The first rotating shaft element 51 is rotatable relative to the second rotating shaft element 52 and the handle 1 is rotated in a direction away from the standing board 2 until the pin 531 moves into the horizontally locking sections 522 of the sliding groove 520 under the resilient force action of the restoring spring 56 (as shown in Fig. 5) so that the scooter 100 is deployed At this moment, the pin 531 is in the horizontally locked position, the first rotating shaft element 51 is not rotatable relative to the second rotating shaft element 52 and further the handle 1 is not rotatable relative to the steering vertical shaft 30; the handle 1 stands upright on the standing board 2 for facilitating a user to ride.

In the scooter 100 of the invention, the foldable device 5 is provided between the handle 1 and the steering vertical shaft 30 connected to the steering wheel 3. The foldable device 5 is very compact in structure design and has a simple appearance. The foldable device 5 itself has a small size and occupies a small space and the scooter 100 is thus easy to store and carry. In addition, the scooter 100 of the invention is simple in folding operation and safe and reliable in use.

While the preferred embodiments of the invention are illustrated above, they are not intended to define the invention. Possible modifications and variations can be made by those skilled in the art without departing from the spirit and scope of the invention. Therefore, the protective scope of the invention should be defined by the appended claims.

## Claims

1. A scooter having a foldable device, which comprising a handle, a steering wheel and a standing board, the steering wheel being connected to a steering vertical shaft, **characterized in that** the handle is connected to the steering vertical shaft via a foldable device, the foldable device comprises a first rotating shaft element, a second rotating shaft element and a locking member, one of the first rotating shaft element and the second rotating shaft element is fixed to the handle, and the other is fixed to the steering vertical shaft, the first rotating shaft element is pivotally connected with the second rotating shaft element so that the first rotating shaft element is pivotable relative to the second rotating shaft element about a pivot, and the locking member is moveable relative to the first rotating shaft element between a locked position and a released position, when the locking member is in the released position, the first rotating shaft element is rotatable relative to the second rotating shaft element, and when the locking member is in the locked position, the first rotating shaft element is locked relative to the second rotating shaft element so that it can not rotate.

2. The scooter having the foldable device according to claim 1, wherein the first rotating shaft element is provided with a pin groove and the second rotating shaft element is provided with a sliding groove, the sliding groove comprises a circumferential section and at least one locking section communicated with the circumferential section, the circumferential section is of an arc shape which is concentric with the pivot, the locking member comprises at least one pin which extends into the sliding groove from the pin groove, the pin can move radially in relation to the pivot inside the pin groove, when the pin moves into the circumferential section of the sliding groove, the locking member is in the released position; and when the pin moves into the locking section of the sliding groove, the locking member is in the locked position.

3. The scooter having the foldable device according to claim 2, wherein the first rotating shaft element comprises two pieces, the second rotating shaft element is located between the two pieces of the first rotating shaft element, a restoring spring is installed on the first rotating shaft element, and when the locking member is in the released position, the restoring spring exerts resilient force on the locking member so that the locking member returns to the locked position automatically without external force.

4. The scooter having the foldable device according to claim 2, wherein the sliding groove comprises two locking sections located at two end portions of the circumferential section, when the pin moves into one of the locking sections, the scooter is locked in a deployed state, and when the pin moves into the other of the locking sections, the scooter is locked in a folded state.

5. The scooter having the foldable device according to claim 2, wherein both the first rotating shaft element and the second rotating shaft element are of a circular plate shape, the locking member further comprises a pin cover fixed to the pin, and the pin cover has a spherical segment shaped outer surface.

6. A foldable device for scooter **characterized in that** the foldable device comprises a first rotating shaft element, a second rotating shaft element and a locking member, the first rotating shaft element is pivotally connected with the second rotating shaft element so that the first rotating shaft element is rotatable relative to the second rotating shaft element about a pivot, and the locking member is moveable relative to the first rotating shaft element between a locked position and a released position, when the locking member is in the released position, the first rotating shaft element is rotatable relative to the second rotating shaft element, and when the locking member is in the locked position, the first rotating shaft element is locked relative to the second rotating shaft element so that it can not rotate.

7. The foldable device for scooter according to claim 6, wherein the first rotating shaft element is provided with a pin groove and the second rotating shaft element is provided with a sliding groove, the sliding groove comprises a circumferential section and at least one locking section communicated with the circumferential section, the circumferential section is of an arc shape which is concentric with the pivot, the locking member comprises at least one pin which extends into the sliding groove from the pin groove, the pin can move radially in relation to the pivot inside the pin groove, when the pin moves into the circumferential section of the sliding groove, the locking member is in the released position; and when the pin moves into the locking section of the sliding groove, the locking member is in the locked position.

8. The foldable device for scooter according to claim 6, wherein the first rotating shaft element comprises two pieces, the second rotating shaft element is located between the two pieces of the first rotating shaft element, and a restoring spring is installed on the first rotating shaft element, when the locking member is in the released position, the restoring spring exerts resilient force on the locking member so that the locking member returns to the locked position automatically without external force.

9. The foldable device for scooter according to claim 7, wherein the sliding groove comprises two locking sections located at two end portions of the circumferential section, when the pin moves into one of the locking sections, the scooter is locked in a deployed state, and when the pin moves into the other of the locking sections, the scooter is locked in a folded state.

10. The foldable device for scooter according to claim 7, wherein the sliding groove comprises two circumferential sections which are disposed symmetrically about the center of the pivot, a locking section is respectively provided on both end portions of each circumferential section, when the locking member is in the released position, the pin can move in the two sliding grooves simultaneously, and when the locking member is in the locked position, the pin can move into the two locking sections of the sliding groove simultaneously.
